# EUROPÄISCHE PATENTSCHRIFT

(11) **EP 4 078 308 B1**
(45) Veröffentlichungstag und Bekanntmachung des Hinweises auf die Patenterteilung: **20.08.2025**
(21) Anmeldenummer: 20829776.2
(22) Anmeldetag: 18.12.2020
(51) Int. Cl.: G05B 19/408

(54) **VERFAHREN UND SYSTEM ZUR SYNCHRONISATION VON SIGNALEN**
METHOD AND SYSTEM FOR SYNCHRONISING SIGNALS
PROCÉDÉ ET SYSTÈME PERMETTANT LA SYNCHRONISATION DE SIGNAUX

(30) Priorität: 20.12.2019 DE 102019135493
(43) Veröffentlichungstag der Anmeldung: 26.10.2022
(73) Patentinhaber: TRUMPF Werkzeugmaschinen SE + Co. KG, 71254 Ditzingen (DE)
(72) Erfinder: KIEFER, Manuel, 74889 Sinsheim (DE); KIEWELER, Thomas, 71299 Wimsheim (DE); LUKAS, Martin, 70839 Gerlingen (DE); SCHOBER, Martin, 70839 Gerlingen (DE)
(74) Vertreter: Trumpf Patentabteilung
(86) Internationale Anmeldenummer: PCT/EP2020/087165
(87) Internationale Veröffentlichungsnummer: WO 2021/123265

(56) Entgegenhaltungen:
- EP-A1- 3 051 374
- EP-A1- 3 521 792
- US-A1- 2016 371 137

## Beschreibung

Die Erfindung betrifft ein Verfahren und ein System zur Synchronisation von Signalen, die mit einem technischen System, insbesondere mit einer Maschine und/oder einem Bearbeitungsprozess, in Beziehung stehen. Dabei umfasst das Verfahren die Verfahrensschritte
a) Aufzeichnen von Daten einer ersten Datenquelle, um eine erste Signalspur zu erhalten;
b) Aufzeichnen von Daten zumindest einer zweiten von der ersten Datenquelle unabhängigen Datenquelle, um zumindest eine zweite Signalspur zu erhalten.

Eine hochpräzise, zeitliche Zuordnung von Maschinensignalen von interner und externer Sensorik ist bislang nicht möglich. Die gängigen Maschinensteuerungen sowie die Maschinen selbst haben keine Schnittstelle, um eine übergeordnete Signalverarbeitung mit fremden Signalen zu ermöglichen.

Aus der EP 2 434 360 A1 ist ein Verfahren zur Bewegungssteuerung bekannt, wobei eine erste Bewegungssteuerung mit einer zweiten Bewegungssteuerung über einen Datenbus verbunden ist, wobei erste Tracedaten der ersten Bewegungssteuerung einen von einer Globalzeit abhängigen Zeitstempel aufweisen und wobei zweite Tracedaten der zweiten Bewegungssteuerung einen von der Globalzeit abhängigen Zeitstempel aufweisen, wobei die unterschiedlichen Tracedaten über den Zeitstempel verknüpft werden.

Aus der EP 3 051 374 A1 ist ein Analyseverfahren zur vergleichenden Analyse unter Berücksichtigung eines Zeitversatzes bekannt.

Aus der EP 3 521 792 A1 ist ein Verfahren zur zeitlichen Synchronisation zweier Datenzeitreihen bekannt.

Im Stand der Technik ist also vorgesehen, Daten zeitsynchronisiert zu erfassen, um diese später einander zuordnen zu können.

Aufgabe der vorliegenden Erfindung ist es, ein Verfahren und ein System bereitzustellen, mit denen Signalspuren unterschiedlicher Datenquellen, die voneinander unabhängig sind und zeitlich nicht synchronisiert sind, zeitlich in Übereinstimmung gebracht werden können.

Gelöst wird diese Aufgabe erfindungsgemäß durch ein Verfahren nach Anspruch 1 und ein System nach Anspruch 10. Offenbart wird ein Verfahren zur Synchronisation von Signalen, die mit einem technischen System, insbesondere einer Maschine und/oder einem Bearbeitungsprozess, in Beziehung stehen, mit den Verfahrensschritten:
a) Aufzeichnen von Daten einer ersten Datenquelle, um eine erste Signalspur zu erhalten,
b) Aufzeichnen von Daten zumindest einer zweiten von der ersten Datenquelle unabhängigen Datenquelle, um zumindest eine zweite Signalspur zu erhalten,
c) Analysieren der Signalspuren anhand von vorbekanntem Domänenwissen,
d) zeitliches Inverbindungbringen der Signalspuren.

Datenquellen im Sinne der Erfindung können beispielsweise Messquellen, Sensoren, Steuerungen, etc. sein. Die aufgezeichneten Daten können gemessene Daten, also Messdaten sein. Außerdem können die Daten Eingangsgrößen oder Ausgangsgrößen von Steuerungen sein. Weiterhin können Antriebe einer Maschine Datenquellen darstellen. Die Daten können entsprechend Daten eines Antriebs sein. Die Daten werden in einer zeitlichen Abhängigkeit aufgezeichnet. Wenn die Daten übertragen werden, werden diese als Signale übertragen. Der zeitliche Verlauf eines Signals wird als Signalspur oder Trace bezeichnet.

Domänenwissen beschreibt global den Zusammenhang aus Schwingungsanregung durch Maschinenkomponenten, Achsdynamik, Absolutposition der kinematischen Kette, gegebenenfalls in Arbeitsraumabhängigkeit, Stellgliedern, z.B. Ventile, dem Betriebszustand einer Bearbeitungseinheit und Geräuschemissionen (Schallwellen). Als Bearbeitungseinheit kommen beispielsweise Laser, Stanzvorrichtung, Presse, Fräskopf, Säge, Bohrer und Wasserstrahl in Frage. Bei Werkzeugmaschinen werden die Bearbeitungseinheiten über Antriebe und möglicherweise dazwischen geschaltete mechanische Komponenten, wie Getriebe oder Portale, in eine bestimmte Achsrichtung bewegt. Abkürzend wird dies häufig als Achse bezeichnet. Sämtliche Komponenten, insbesondere Achsen, die zu einer Bewegung einer Bearbeitungseinheit beitragen, werden kinematische Kette genannt. Weiterhin zählt zum Domänenwissen der Zusammenhang einzelner Komponenten, insbesondere die Infrastruktur, Bewegungstrajektorien, Bearbeitungs-Prozesse und Eigenschaften aller beteiligten Komponenten.

Wenn die Signalspuren zeitlich in Verbindung gebracht werden, können die Signalspuren zeitlich synchronisiert werden. Insbesondere können die Signalspuren einer gemeinsamen Zeitachse zugeordnet werden. Auf diese Art und Weise können fehlerhafte Maschinenzustände, insbesondere langsam fortschreitende Defekte, frühzeitig erkannt werden. Weiterhin können nicht von der Maschine oder den Achsen stammende Geräusche unterdrückt werden. Dadurch wird das Signal-Rausch-Verhältnis verbessert.

Bereits bei zwei unterschiedlichen, aber sinnvoll gewählten Signalspuren kann eine zeitliche Synchronität eindeutig aus dem zuvor genannten Domänenwissen ermittelt werden. Je mehr unterschiedliche Signalspuren zur Verfügung stehen, desto zuverlässiger ist die Analyse. Mit dem erfindungsgemäßen Verfahren ist eine Synchronisierung in Echtzeit denkbar, sodass Echtzeitauswertungen auf der Basis unterschiedlicher Datenquellen möglich sind. Somit ergeben sich neue Möglichkeiten für die Fehlerdetektion, die Fehlerdiagnose, Zustandsüberwachung und vorausschauende Instandhaltung von Gesamtsystemen. Insbesondere ist eine Echtzeit-Fehlerdiagnose von Gesamtsystemen mit unterschiedlich laufenden Uhren möglich. Störquellen können anhand bekannter und zu erwartender Signalmuster unterdrückt werden. Die Bearbeitungsqualität kann verbessert werden. Fehlalarme und fehlerhafte Fehlerinterpretationen können reduziert werden. Das erfindungsgemäße Verfahren kann aufwandsarm und kostengünstig implementiert werden, da kein zusätzlicher Aufwand für eine Zeit-Synchronisation betrieben werden muss. Weiterhin ist das erfindungsgemäße Verfahren skalierbar, da es für zwei und mehr unterschiedliche Datenquellen verwendbar ist. Auch ein systemübergreifender Einsatz durch eine Kaskadierung ist möglich. Somit können ganze Fertigungsanlagen oder Fabrikhallen diagnostiziert werden.

Die Analyse der Signalspuren kann modellbasiert erfolgen. Insbesondere kann anhand von Domänenwissen modellbasiert eine zeitliche Zuordnung von Datenwerten aus Signalspuren unterschiedlicher Datenquellen automatisiert erfolgen. Abweichungen, z.B. von Schalldruck, Ordnungszahlen oder mechanischen Resonanzen, führen zu schneller Fehlerdetektion, genauer Fehleridentifikation und effizienter Fehlerbehebung.

Die Analyse der Signalspuren kann insbesondere mittels Mustererkennung anhand von Referenzmustern erfolgen. Die Referenzmuster sind aus dem Domänenwissen bekannt. Mittels Mustererkennung und Mustervergleich ist es möglich, Signalspuren aus verschiedenen Datenquellen, insbesondere Messquellen, in zeitliche Überdeckung zu bringen. Beispielsweise erzeugt die kinematische Kette ein bekanntes Anregungsmuster entsprechend des Bewegungsprofils der Stellglieder/Achsen. Dieses Anregungsmusters findet sich übersetzt in verschiedenen Datenaufzeichnungen, insbesondere Messaufzeichnungen, wieder. Zusätzlich können mechanische Resonanzstellen einer Maschine angeregt werden, welche sich ebenfalls in bekannten Schwingungsphänomenen zeigen.

Besondere Vorteile ergeben sich, wenn die Aufzeichnung der Signalspuren erfolgt, ohne die Aufzeichnungen zeitlich zu synchronisieren. Es ist somit nicht nötig, wie im Stand der Technik, die Signalspuren mit einem Zeitstempel zu versehen.

Zumindest eine Signalspur einer maschineninternen Datenquelle und zumindest eine Signalspur einer maschinenexternen Datenquelle können verwendet werden. Eine maschineninterne Datenquelle kann beispielsweise eine maschineninterne Steuerung oder ein maschineninterner Antrieb sein. Eine maschinenexterne Datenquelle kann beispielsweise eine Kamera oder Mikrofon sein, mit denen der Prozess, der auf der Maschine durchgeführt wird, beobachtet wird. Wenn maschineninterne und maschinenexterne Datenquellen verwendet werden, kann die Diagnose eines Systems und insbesondere die Fehlererkennung verbessert und erleichtert werden.

Vorzugsweise überlappen sich die Zeiträume, in denen die Daten der Datenquellen aufgezeichnet werden. Somit ist es möglich, nach der Analyse die aufgezeichneten Signalspuren in zeitliche Übereinstimmung zu bringen und insbesondere zu synchronisieren.

Nach der Synchronisation der Signalspuren kann eine Zeit-Frequenz-Transformation, z. B. Fourier-Transformation, durchgeführt werden. Somit kann die Analyse und Fehlersuche erleichtert werden.

Um das Analyseergebnis zu verbessern, ist vorgesehen, dass jede Signalspur mindestens eine vorgegebene Anzahl von Datenpunkten umfasst. Diese Anzahl kann von der Frequenz abhängen, mit der Datenpunkte erfasst werden. Diese kann sich über viele Größenordnungen unterscheiden. Eine NC-Steuerung steuert im Millisekundenbereich, die Interpolation der NC-Steuerung noch schneller. Dies ist die Frequenz mit der bspw. Antriebe angesprochen werden, z.B. der Motorstrom bei einer Regelung angepasst wird, um eine Zielgeschwindigkeit zu erreichen. Das wäre also um 1 kHz. Optische oder akustische Sensoren können in einem weiten Frequenzband messen. Eine Kamera z.B. in der Größenordnung von 10 oder 100 Hz, für Spezialanwendungen ggfs. noch höher. Photodioden messen im Bereich von MHz oder sogar GHz. Akustische Sensoren lösen bspw. im hörbaren Bereich auf, d.h. im kHz-Bereich, es gibt aber auch Sensoren im MHz- oder GHz-Bereich. Zwei Traces lassen sich somit miteinander in Verbindung bringen, wenn ein charakteristisches Signal von den beteiligten Datenquellen auch aufgelöst werden kann und eine entsprechende Anzahl an Messpunkten (in Abhängigkeit der Messfrequenz, bzw. Aufzeichnungsfrequenz) aufgezeichnet wurde.

Das technische System, insbesondere die erste oder zweite Datenquelle, und damit die aufgezeichneten Daten werden gezielt manipuliert, dabei werden mechanische Resonanzstellen gezielt angeregt. Eingangsgrößen, beispielsweise von Steuerungen, können gezielt manipuliert werden. Wenn Eingangsgrößen gezielt manipuliert werden, ist ein bestimmtes Ergebnis bzw. Verhalten bei den aufgezeichneten Daten zu erwarten. Es kann dann analysiert werden, ob das aufgezeichnete Signal das erwartete Verhalten zeigt. Anhand dieser Analyse kann auf mögliche Fehlerquellen geschlossen werden.

Jede Datenaufzeichnung kann für sich zeitnormiert sein und das Nyquist-Kriterium einhalten. Auf diese Art und Weise kann die Zuverlässigkeit der Analyse verbessert werden.

Anhand der analysierten Signalspuren werden eine Fehlererkennung, Fehlerdiagnose, Zustandsüberwachung und/oder vorausschauende Instandhaltung durchgeführt.

Anwendungsfälle für das erfindungsgemäße Verfahren sind beispielsweise Maschinendiagnose, wie z.B. Achsdiagnose, Prozessdiagnose und Diagnose von weiteren, externen Ursachen. Die Erfindung erlaubt eine aggregierte und korrelierende Auswertung von Datenquellen zur Früherkennung von sich anbahnenden Fehlern.

Offenbart wird außerdem ein System zur Synchronisation von Signalen mit einer ersten Datenquellen, die eine erste Signalspur liefert, und einer zweiten Datenquelle, die eine zweite Signalspur liefert, einer Analyseeinrichtung, der die Signalspuren zugeführt werden und die mit einer Speichereinrichtung in Verbindung steht oder eine solche aufweist, in der Domänenwissen gespeichert ist, wobei die Analyseeinrichtung eingerichtet ist, die Signalspuren anhand des gespeicherten Domänenwissens zeitlich in Verbindung zu bringen. Mit einem solchen System können Signalspuren, die von unterschiedlichen Datenquellen stammen und die keinen Zeitstempel aufweisen, zeitlich synchronisiert werden. Somit ist es möglich, das System zu analysieren und gegebenenfalls Fehler zu erkennen. Vorzugsweise ist zumindest eine Datenquelle maschinenintern und zumindest eine Datenquelle maschinenextern angeordnet.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigt sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

Es zeigen:
- Fig. 1: eine schematische Darstellung eines Systems;
- Fig. 2a bis 2c: Diagramme zur Erläuterung der Signalsynchronisation;
- Fig. 3a bis 3c: Diagramme zur Erläuterung der Fehleridentifikation;
- Fig. 4: ein weiteres Diagramm zu Erläuterung der Fehleridentifikation;
- Fig. 5: ein Flussdiagramm zur Erläuterung des erfindungsgemäßen Verfahrens.

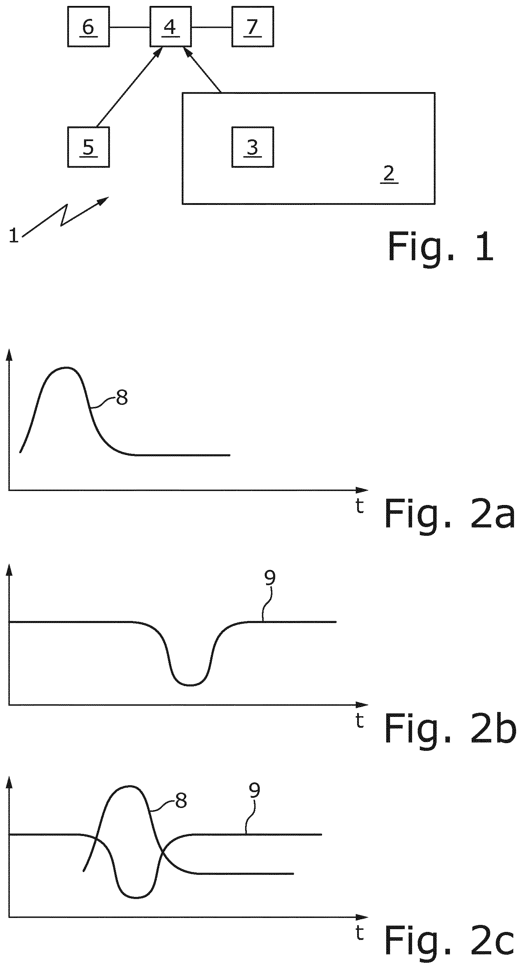

Die Fig. 1 zeigt ein System 1 zur Synchronisation von Signalen. Auf einer Maschine 2 wird ein Bearbeitungsprozess durchgeführt. Die Maschine 2 weist eine erste Datenquelle 3 auf. Bei der ersten Datenquelle 3 kann es sich beispielsweise um eine Steuerung der Maschine 2 handeln. Insbesondere kann es sich um eine maschineninterne Datenquelle handeln. Daten der Datenquelle 3 werden aufgezeichnet und als Signalspur an eine Analyseeinrichtung 4 übermittelt. Die Analyseeinrichtung 4 kann maschinenintern oder extern angeordnet sein.

Eine weitere, zweite Datenquelle 5 ist im gezeigten Ausführungsbeispiel maschinenextern angeordnet. Beispielsweise kann es sich bei der zweiten Datenquelle 5 um ein Mikrofon oder eine Kamera handeln. Die Daten der Datenquelle 5 werden ebenfalls aufgezeichnet und als Signalspur ebenfalls an die Analyseeinrichtung 4 übermittelt. Die Datenaufzeichnung der Daten der Datenquellen 3 und 5 erfolgt unabhängig voneinander. Insbesondere erfolgt sie ohne einen synchronisierten Zeitstempel der Datenquellen 3, 5 mit der Analyseeinrichtung 4 und untereinander.

In dem Speicher 6 ist so genanntes Domänenwissen abgelegt. Dabei kann es sich um vorher aufgezeichnete Messdaten, Simulationsergebnisse, historische Daten der Maschine 2 selbst, Daten von anderen Maschinen etc. handeln. Die Analyseeinrichtung 4 kann auf das Domänenwissen zugreifen. Anhand des Domänenwissens werden die Signalspuren der Datenquellen 3, 5 analysiert und zeitlich zueinander in Verbindung gesetzt. Auf einer Anzeigeneinrichtung 7 kann das Ergebnis angezeigt werden.

Die Figur 2a zeigt die Signalspur 8, die den aufgezeichneten Daten der Datenquelle 3 entspricht. Die Figur 2b zeigt die Signalspur 9, die den aufgezeichneten Daten der Datenquelle 5 entspricht. Im Domänenwissen ist bekannt, dass die Signalspur 8 in Reaktion auf ein bestimmtes Anregungssignal zu sehen ist. Weiterhin ist im Domänenwissen bekannt, dass als Reaktion auf dasselbe Anregungssignal die Signalspur 9 zu erwarten ist. Weiterhin ist bekannt, in welcher zeitlichen Relation die Signalspuren 8 und 9 zu dem Anregungssignal stehen. Anhand dieses Wissens können die Signalspuren 8 und 9 zeitlich in Relation gebracht werden, was in der Figur 2c dargestellt ist. Die Signalspuren 8 und 9 sind hier so dargestellt, dass sie einer gemeinsamen Zeitachse zugeordnet sind.

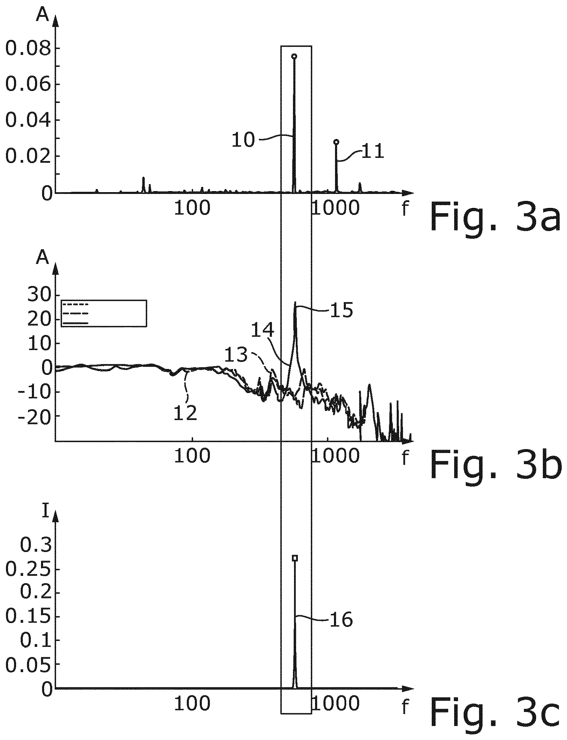

Anhand der Fig. 3a bis 3c soll das erfindungsgemäße Verfahren erläutert werden. Durch eine externe Datenquelle, insbesondere ein Mikrofon, wurde ein Störgeräusch einer Maschine aufgezeichnet. In der Fig. 3a ist die Spektralanalyse des Störgeräusches dargestellt, wobei die Amplitude über der Frequenz aufgezeichnet ist. Die Spektralanalyse wurde erstellt, nachdem das Störsignal zunächst in zeitlicher Relation zu anderen Signalspuren gesetzt wurde und eine Fourier-Transformation durchgeführt wurde. Bei der Frequenz 566,4 Hz wird die erste Harmonische 10 angezeigt. Bei der Frequenz 1132,9 Hz wird die zweite Harmonische 11 dargestellt.

In der Fig. 3b ist der Führungsfrequenzgang eines Geschwindigkeitsregelkreises der Z-Achse einer Maschine gezeigt, wobei die Amplitude über der Frequenz aufgezeichnet ist. Die Kurve 12 stellt den Führungsfrequenzgang einer ersten Inbetriebnahme dar. Die Kurve 13 stellt den Führungsfrequenzgang einer zweiten Inbetriebnahme, beispielsweise bei einem Kunden, dar. Die Kurven 12, 13 weisen eine ähnliche Form auf und zeigen keine Auffälligkeiten. Die Kurve 14 entspricht einem Führungsfrequenzgang, der als zweite Signalspur aufgenommen wurde, als sich das Störgeräusch zeigte. Die Kurve 14 wurde ermittelt, indem zunächst die zweite Signalspur mit den Störgeräuschen synchronisiert und dann Fourier transformiert wurde. Bei der Frequenz 566,4 Hz ist ein Peak 15 zu erkennen. Dies bedeutet, dass eine Auffälligkeit in der Z-Achse bei einer Frequenz festgestellt wurde, die mit der ersten Harmonischen 10 des Störgeräuschs übereinstimmt. Die zweite Harmonische 11 korreliert nicht mit dem Frequenzgang der Z-Achse und hat daher eine andere Ursache.

In der Fig. 3c ist der momentenbildende Strom (Strom, der für die Drehmomentbildung des Antriebs verantwortlich ist) über der Frequenz aufgezeichnet. Der momentenbildende Strom der Z-Achse weist ebenfalls bei der Frequenz 566,4 Hz einen Peak 16 auf. Somit konnte ein Fehler in der Z-Achse bestätigt werden.

Dadurch, dass die Signalspuren zunächst zeitlich zueinander in Beziehung gesetzt wurden, war es möglich, die aus den Signalspuren ermittelten Spektren in Einklang zu bringen. In den momentenbildenden Strömen der anderen Achsen wurde kein Peak bei der Frequenz 566,4 Hz ermittelt. Somit konnte ausgeschlossen werden, dass der Fehler, der das Störgeräusch verursacht hat, durch eine der anderen Achsen verursacht wurde. Aufgrund des Domänenwissens ist es bekannt, woher Peaks bei bestimmten Frequenzen stammen. Somit ist es möglich, aufgrund der aufgezeichneten Signalspuren zu ermitteln, wo ein Fehler vorliegt und diesen gezielt zu beheben.

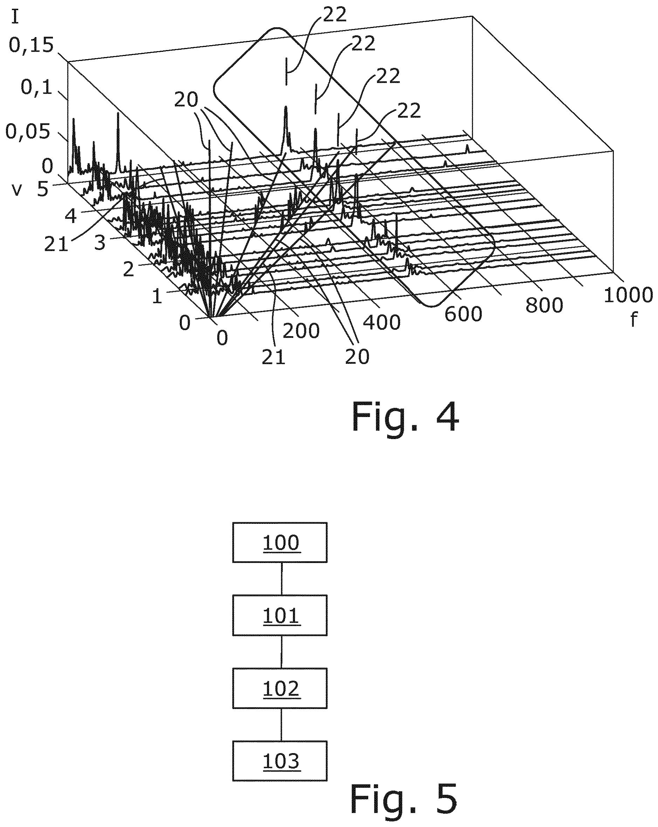

In dem Diagramm der Fig. 4 ist das Spektrum des momentenbildenden Stroms einer X-Achse dargestellt. In der Ebene ist die Geschwindigkeit v über der Frequenz f dargestellt. Die vertikale-Achse zeigt die Amplitude des momentenbildenden Stroms. Entlang der Linien 20 ist die Anregung (Harmonische) durch den Zahneingriff Ritzel-Zahnstange gezeigt. Entlang der Linien 21 sind die Anregungen durch einen Motor gezeigt. Die Linien 22 zeigen Überlagerungen von Schallpegeln an. Scharfe Peaks sind bei einer konstanten Frequenz von hier ca. 550 Hz zu sehen. Sie deuten auf mechanische Resonanzstellen hin. Durch die Überlagerung von Schallpegeln ist eine Aussage über den Schweregrad und das Ausmaß der Schwingungen möglich.

Hier ist zu erkennen, dass die Signalspuren aufgrund von Anregungen durch den Motor und aufgrund von Anregungen aufgrund eines Zahneingriffs Ritzel-Zahnstange sowie Signalspuren die über ein Mikrofon aufgezeichnet wurden, zeitlich in Beziehung gesetzt wurden, um Aussagen über das Verhalten der Maschine zu erhalten. Es ist zu erkennen, dass für unterschiedliche Geschwindigkeiten der X-Achse Resonanzen bei 550 Hz auftreten. Dies spricht dafür, dass die Resonanzen auf ein Strukturelement der Maschine zurückgehen und nicht auf den Antrieb (Motor).

Im Flussdiagramm der Fig. 5 ist mit 100 der Schritt des Aufzeichnens von Daten einer ersten Datenquelle bezeichnet, um eine erste Signalspur zu erhalten. Im Schritt 101 werden Daten einer weiteren Datenquelle aufgezeichnet, wobei die weitere Datenquelle von der ersten Datenquelle unabhängig ist. Dadurch wird eine zweite Signalspur erhalten. Im Schritt 102 werden die Signalspuren anhand von bekanntem Domänenwissen analysiert. Im Schritt 103 werden die Signalspuren zeitlich zueinander in Verbindung gebracht. Es kann ein weiterer Schritt folgen, in dem die zeitlich synchronisierte Signalspuren in den Frequenzbereich transformiert werden und das Ergebnis (automatisiert) analysiert wird. Diese Analyse kann auch mit Hilfe bzw. gestützt auf Domänenwissen erfolgen.

## Patentansprüche

1. Computerimplementiertes Verfahren zur Synchronisation von Signalspuren (8, 9), die mit einem technischen System, insbesondere einer Maschine und/oder einem Bearbeitungsprozess, in Beziehung stehen, mit den Verfahrensschritten:
a. Aufzeichnen von Daten einer ersten Datenquelle, um eine erste Signalspur (8) zu erhalten,
b. Aufzeichnen von Daten zumindest einer zweiten von der ersten Datenquelle unabhängigen und zeitlich nicht synchronisierten Datenquelle, um zumindest eine zweite Signalspur (9) zu erhalten,
c. Analysieren der Signalspuren (8, 9) anhand von vorbekanntem Domänenwissen,
d. Zeitliches in Übereinstimmung bringen und synchronisieren der Signalspuren (8, 9), anhand des Domänenwissens,
wobei anhand der analysierten und synchronisierten Signalspuren (8, 9) eine Fehlererkennung, Fehlerdiagnose, Zustandsüberwachung und/oder vorausschauende Instandhaltung durchgeführt wird,
**dadurch gekennzeichnet, dass** das technische System, insbesondere die erste oder zweite Datenquelle, und damit die aufgezeichneten Daten gezielt manipuliert werden, sodass mechanische Resonanzstellen gezielt angeregt werden.

2. Verfahren nach Anspruch 1, **dadurch gekennzeichnet, dass** die Signalspuren (8, 9) einer gemeinsamen Zeitachse zugeordnet werden.

3. Verfahren nach Anspruch 1 oder 2, **dadurch gekennzeichnet, dass** die Analyse der Signalspuren (8, 9) modellbasiert erfolgt.

4. Verfahren nach einem der vorhergehenden Ansprüche, **dadurch gekennzeichnet, dass** die Analyse der Signalspuren (8, 9) mittels Mustererkennung und anhand von Referenzmustern erfolgt.

5. Verfahren nach einem der vorhergehenden Ansprüche, **dadurch gekennzeichnet, dass** die Aufzeichnung der Signalspuren (8, 9) erfolgt, ohne die Aufzeichnungen zeitlich zu synchronisieren.

6. Verfahren nach einem der vorhergehenden Ansprüche, **dadurch gekennzeichnet, dass** zumindest eine Signalspur (8) einer maschineninternen Datenquelle (3) und zumindest eine Signalspur (9) einer maschinenexternen Datenquelle (5) verwendet wird.

7. Verfahren nach einem der vorhergehenden Ansprüche, **dadurch gekennzeichnet, dass** sich die Zeiträume, in denen die Daten der Datenquellen (3, 3) aufgezeichnet werden, überlappen.

8. Verfahren nach einem der vorhergehenden Ansprüche, **dadurch gekennzeichnet, dass** jede Signalspur (8, 9) mindestens eine vorgegebenen Anzahl von Datenpunkten umfasst.

9. Verfahren nach einem der vorhergehenden Ansprüche, **dadurch gekennzeichnet, dass** jede Datenaufzeichnung für sich zeitnormiert ist und das Nyquist-Kriterium einhält.

10. System (1) zur Synchronisation von Signalspuren (8, 9), mit einer ersten Datenquelle (3), die eine erste Signalspur (8) liefert und einer zweiten von der ersten Datenquelle unabhängigen und zeitlich nicht synchronisierten Datenquelle (5), die eine zweite Signalspur (9) liefert, einer Analyseeinrichtung (4), der die Signalspuren (8, 9) zugeführt werden und die mit einer Speichereinrichtung (6) in Verbindung steht oder eine solche aufweist, in der Domänenwissen gespeichert ist, wobei die Analyseeinrichtung (4) eingerichtet ist, die Signalspuren (8, 9) anhand des gespeicherten Domänenwissens zeitlich in Übereinstimmung zu bringen und zu synchronisieren,
und anhand der analysierten und synchronisierten Signalspuren (8, 9) eine Fehlererkennung, Fehlerdiagnose, Zustandsüberwachung und/oder vorausschauende Instandhaltung durchzuführen,
**dadurch gekennzeichnet, dass** die Analyseeinrichtung (4) dazu vorgesehen und eingerichtet ist das technische System (1), insbesondere die erste oder zweite Datenquelle (3, 5), und damit die aufgezeichneten Daten gezielt zu manipulieren, sodass mechanische Resonanzstellen gezielt anzuregen,.

11. System nach Anspruch 10, **dadurch gekennzeichnet, dass** zumindest eine Datenquelle (3) maschinenintern und zumindest eine Datenquelle (5) maschinenextern angeordnet ist.

## Claims

1. A computer-implemented method for the synchronization of signal tracks (8, 9) which are related to a technical system, in particular a machine and/or a processing process, comprising the procedural steps:
a. recording data from a first data source to obtain a first signal track (8),
b. recording data from at least a second data source that is independent of the first data source and not synchronized in time, in order to obtain at least a second signal track (9),
c. analyzing the signal tracks (8, 9) based on prior domain knowledge,
d. bringing into temporal agreement and synchronizing the signal tracks (8, 9) based on domain knowledge,
wherein error detection, error diagnosis, status monitoring and/or predictive maintenance are carried out on the basis of the analyzed and synchronized signal tracks (8, 9),
**characterized in that** the technical system, in particular the first or second data source, and thus the recorded data, are specifically manipulated so that mechanical resonance points are specifically excited.

2. The method according to claim 1, **characterized in that** the signal tracks (8, 9) are assigned to a common time axis.

3. The method according to claim 1 or 2, **characterized in that** the analysis of the signal tracks (8, 9) is model-based.

4. The method according to one of the preceding claims, **characterized in that** the analysis of the signal tracks (8, 9) is carried out by means of pattern recognition and on the basis of reference patterns.

5. The method according to one of the preceding claims, **characterized in that** the recording of the signal tracks (8, 9) is carried out without synchronizing the recordings in time.

6. The method according to one of the preceding claims, **characterized in that** at least one signal track (8) of a data source (3) inside the machine and at least one signal track (9) of a data source (5) outside the machine are used.

7. The method according to one of the preceding claims, **characterized in that** the time periods during which the data from the data sources (3, 3) are recorded overlap.

8. The method according to one of the preceding claims, **characterized in that** each signal track (8, 9) comprises at least a predetermined number of data points.

9. The method according to one of the preceding claims, **characterized in that** each data recording is time-normalized and complies with the Nyquist criterion.

10. A system (1) for synchronizing signal tracks (8, 9), comprising a first data source (3) which supplies a first signal track (8) and a second data source (5) which is independent of the first data source and is not synchronized in time and which supplies a second signal track (9), an analysis device (4) to which the signal tracks (8, 9) are fed and which is connected to or has a memory device (6) in which domain knowledge is stored, wherein the analysis device (4) is configured to bring the signal tracks (8, 9) into temporal agreement and to synchronize them on the basis of the stored domain knowledge,
and, on the basis of the analyzed and synchronized signal tracks (8, 9), to perform error detection, error diagnosis, status monitoring and/or predictive maintenance, **characterized in that** the analysis device (4) is designed and configured to specifically manipulate the technical system (1), in particular the first or second data source (3, 5), and thus the recorded data, so that mechanical resonance points can be specifically excited.

11. The system according to claim 10, **characterized in that** at least one data source (3) is arranged inside the machine and at least one data source (5) is arranged outside the machine.

## Revendications

1. Procédé mis en œuvre par ordinateur pour la synchronisation de pistes de signaux (8, 9), qui sont en relation avec un système technique, en particulier une machine et/ou un processus de traitement, avec les étapes de procédé :
a. enregistrer des données d'une première source de données afin d'obtenir une première piste de signal (8),
b. enregistrer des données d'au moins une deuxième source de données indépendante de la première et une source de données non synchronisée temporellement, afin d'obtenir au moins une deuxième piste de signal (9),
c. analyser les pistes de signaux (8, 9) sur la base de connaissances du domaine préalables,
d. amener à un alignement temporel et synchroniser les pistes de signaux (8, 9) sur la base des connaissances du domaine,
dans lequel une détection de défauts, un diagnostic de défauts, une surveillance de l'état et/ou une maintenance prédictive sont réalisés sur la base des pistes de signaux (8, 9) analysées et synchronisées,
**caractérisé en ce que** le système technique, en particulier la première ou la deuxième source de données, et par conséquent les données enregistrées, sont manipulés de manière ciblée de façon à exciter de manière ciblée des régions de résonance mécanique.

2. Procédé selon la revendication 1, **caractérisé en ce que** les pistes de signaux (8, 9) sont associées à un axe temporel commun.

3. Procédé selon la revendication 1 ou 2, **caractérisé en ce que** l'analyse des pistes de signaux (8, 9) est effectuée sur la base d'un modèle.

4. Procédé selon l'une des revendications précédentes, **caractérisé en ce que** l'analyse des pistes de signaux (8, 9) est effectuée au moyen de la reconnaissance de motifs et sur la base de motifs de référence.

5. Procédé selon l'une des revendications précédentes, **caractérisé en ce que** l'enregistrement des pistes de signaux (8, 9) est effectué sans synchroniser temporellement les enregistrements.

6. Procédé selon l'une des revendications précédentes, **caractérisé en ce qu'**au moins une piste de signal (8) d'une source de données interne à la machine (3) et au moins une piste de signal (9) d'une source de données externe à la machine (5) sont utilisées.

7. Procédé selon l'une des revendications précédentes, **caractérisé en ce que** les périodes pendant lesquelles les données des sources de données (3, 3) sont enregistrées se chevauchent.

8. Procédé selon l'une des revendications précédentes, **caractérisé en ce que** chaque piste de signal (8, 9) comprend au moins un nombre prédéfini de points de données.

9. Procédé selon l'une des revendications précédentes, **caractérisé en ce que** chaque enregistrement de données est normalisé temporellement de manière autonome et respecte le critère de Nyquist.

10. Système (1) de synchronisation de pistes de signaux (8, 9), avec une première source de données (3) qui fournit une première piste de signal (8), et avec une deuxième source de données (5), indépendante de la première source de données et non synchronisée temporellement, qui fournit une deuxième piste de signal (9), un dispositif d'analyse (4) à laquelle sont transmises les pistes de signaux (8, 9) et qui est connecté à un dispositif de stockage (6) ou en comprend un, dans lequel des connaissances du domaine sont stockées, dans lequel le dispositif d'analyse (4) est conçu pour amener à un alignement temporel et pour synchroniser les pistes de signaux (8, 9) sur la base des connaissances du domaine stockées,
et pour réaliser, sur la base des pistes de signaux (8, 9) analysées et synchronisées, une détection de défauts, un diagnostic de défauts, une surveillance de l'état et/ou une maintenance prédictive,
**caractérisé en ce que** le dispositif d'analyse (4) est prévu et conçu pour manipuler de manière ciblée le système technique (1), en particulier la première ou la deuxième source de données (3, 5), et par conséquent les données enregistrées, de façon à exciter de manière ciblée des régions de résonance mécanique.

11. Système selon la revendication 10, **caractérisé en ce qu'**au moins une source de données (3) est interne à la machine, et au moins une source de données (5) est externe à la machine.
